Europäisches Patentamt

European Patent Office

Office européen des brevets

(11) Publication number: **0 125 861**
**B1**

## EUROPEAN PATENT SPECIFICATION

(45) Date of publication of patent specification: **15.03.89**

(21) Application number: **84303067.7**

(22) Date of filing: **08.05.84**

(51) Int. Cl.⁴: **H 01 R 17/00, H 02 G 3/20**

(54) Electrical outlet system.

(30) Priority: **07.05.83 GB 8312621**

(43) Date of publication of application:
**21.11.84 Bulletin 84/47**

(45) Publication of the grant of the patent:
**15.03.89 Bulletin 89/11**

(84) Designated Contracting States:
**AT BE CH DE FR IT LI LU NL SE**

(56) References cited:
**CH-A- 320 091**
**GB-A-1 420 748**
**US-A-1 364 335**

(73) Proprietor: **Ranton & Company Limited**
**Rock Works Commerce Road**
**Brentford Middlesex TW8 8LN (GB)**

(72) Inventor: **Cooke, Alan John**
**48 Lynton Close**
**Isleworth Middlesex, TW7 7ET (GB)**
Inventor: **Gearing, Hugh Jonathon**
**229 Windmill Road**
**Ealing London, W5 4DJ (GB)**

(74) Representative: **Dodd, David Michael et al**
**ROYSTONS 531 Tower Building Water Street**
**Liverpool L3 1BA (GB)**

Courier Press, Leamington Spa, England.

## Description

The invention relates to outlet connection systems particularly in relation to mains electrical wiring for lighting or other purposes at power ratings below the 13 amp or 15 amp ratings customary for principal power circuits, such as for the ring type.

For many years, we have made a lighting outlet having a base carrying a socket that affords a push-fit for a three-pin plug normally carrying a cord pendant through a cover screw-fitting to the base. From that experience, we believe that there is a market for a less bulky replacement product that would not require separate plug and cover, especially if it offers a more acceptable alternate to conventional ceiling rose type outlets that inevitably carry risks at removal of pendant cords and/or lampholders attached thereto due to exposure of live terminals.

According to one aspect of the invention, there is provided, an electrical mains outlet connection system comprising a first coupler fitting of socket-type fixed or to be fixed at an outlet position and having electrical supply terminals with related electrical contacts internally thereof relative to a face of the fitting which face has entries therethrough, and a second coupler fitting of plug type capable of substantially rectilinear movement over said face and having external projecting electrical contacts to enter the first coupler fitting via said entries, characterised in that said related electrical contacts are displaced from said entries so as to be shielded by said face and said projecting contacts have parts thereof engaging said displaced contacts only after rectilinear movement of the plug fitting over said face of the socket fitting.

Patent Specifications cited against this application show plug and socket connection systems involving relative rectilinear movement after first mutual engagement, but still permit access to socket contacts through mutual engagement entries thereto.

Advantageously, for embodiments of this invention, the first and second coupler fittings may have further mutual engaging means to secure them against separation and to take at least most of associated mechanical loading. Such further mutual engaging means can be comprised of further projections from the second coupler fitting and corresponding further entries through the face of the first coupler fitting.

Preferably, the external projecting contacts and associated said entries are, respectively, spaced transversely of the direction of said substantially rectilinear movement. At least then, the further projections and corresponding entries may be spaced in said direction, usually with the external contacts and associated entries between two of them. Specifically, such spacings may be the only spacings.

To aid taking mechanical loads, we prefer that the further projections each have free ends extending transversely of the direction of said substantially rectilinear movement and the corresponding entries each have relatively enlarged and restricted parts in that order of encounter relative to said direction.

We further prefer to use one of said further projections as an earth contact, conveniently rearmost in said direction, and its said corresponding entry has, in the first coupler fitting, an internal earth contact therefor and an associated earth connection terminal.

The external projecting contacts may be L-shaped blades each extending from the end of one limb and lying wholly parallel with the direction of said substantially rectilinear movement and the associated entries are slots similarly extending parallel with said direction and of lengths and positions such that the free ends of the external contacts go below ends of the slots during said movement.

Suitable internal contacts for the external projecting contacts each comprises a pair of resilient leaves to grip the free ends of the respective external projecting contact between them and such leaves may be bent so as medially to approach each other closely, and can have associated latching means like pips and holes or other mutual engaging means. Associated electrical terminals may be blocks each after the associated said leaves in said direction.

It can be particularly useful for the first coupler fitting to have a further electrical terminal, say unconnected to any other contact for loop-in wiring purposes.

The first coupler fitting can be supplied as a basic socket unit or for incorporation into a plate, case or other body to complete an electrical outlet accessory, either being comprehended as a said first coupler fitting and similar considerations apply to an outlet or plug unit in relation to the second coupler fitting.

Such basic socket and/or plug units are preferably cased and provide electrical supply entries, one for each terminal thereof through a face opposite their coupling engagement faces. The basic socket unit may further have an externally projecting earth strap to mate with or be further connected to a screw-mounting box for the first coupler fitting.

Either or both of the plug unit and the socket unit can have screw-clamp type terminal blocks with their screws accessible through holes in one or other end of their casings, which we prefer to providing access through their sides.

Specific practical implementation of this invention will now be described, by way of example, with reference to the accompanying drawings, in which:

Figure 1 is an internal plan view of a socket unit with a cover part removed;

Figure 2 is a sectional view on line A—A of Figure 1;

Figure 3 is a sectional view on line B—B of Figure 1;

Figure 4 is a plan view of the connection face of the same socket unit;

Figure 5 is an end view of the same socket unit;

Figures 6, 7 and 8 show incorporation of the socket unit of Figures 1 to 5 in various base units;

Figure 9 is an internal plan view of a coupler or plug unit with a cover part removed;

Figure 10 is a sectional view on line C—C of Figure 9;

Figure 11 is a sectional view on line D—D of Figure 9;

Figure 12 is a plan view of the connection face of the same coupler or plug unit;

Figure 13 is an end view of the same unit; and

Figure 14 is a sectional part view showing a modification.

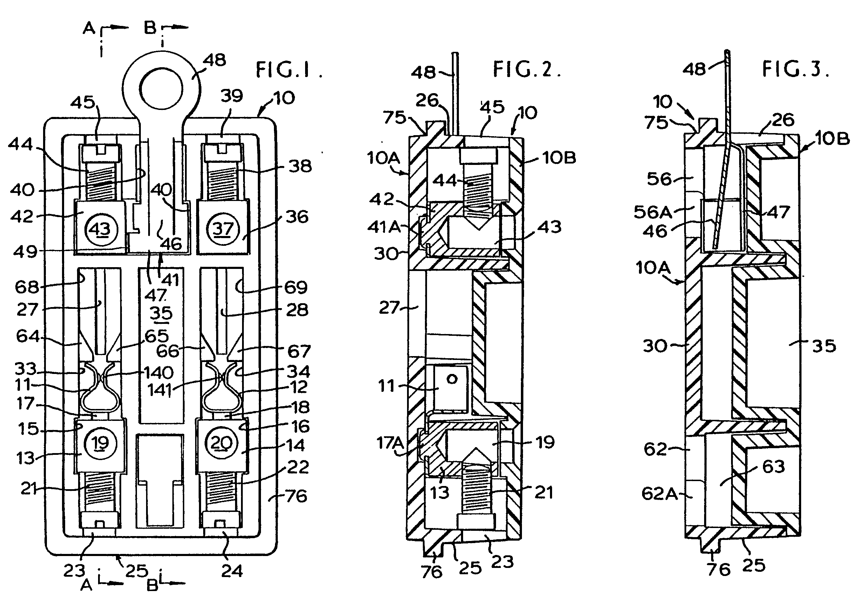

Referring first to Figures 1 to 5, a socket unit is shown at 10 as comprising internal contacts 11, 12 on terminal blocks 13, 14 for line/neutral, i.e. "live", connections. The blocks 13, 14 are located in wells 15, 16 and have tongues 17, 18 rivetted to the blocks (see 17A) and carrying the contacts 11, 12 extending therefrom as spring jaws. The blocks 13, 14 are shown with wire-receiving holes 19, 20 and transverse clamp-screws 21, 22 accessible through holes 23, 24 in one end 25 of what is generally elongate cubic box 10A and cover 10B. The terminal blocks 13, 14 and associated terminals 11, 12 are shown within that half of the socket 10 extending from its end-wall 25 and spaced one to each side of its longitudinal axial plane.

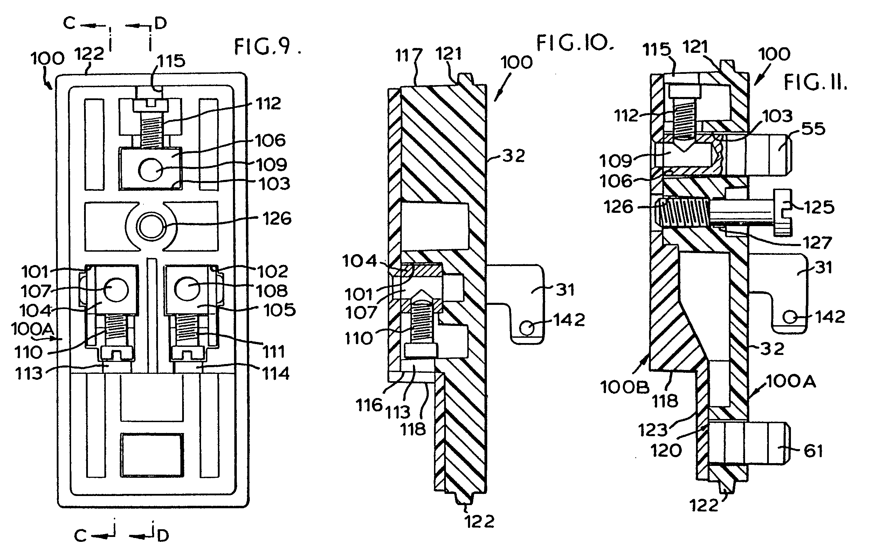

The spring jaw contacts 11, 12 are situated below extensions of long axes of spaced parallel slots 27, 28 in one major face 30 of the socket unit 10. Referring now also to Figures 9 to 13, the contacts 11, 12 will receive correspondingly spaced L-shaped blade contacts (see 31) extending exteriorly of a coupling or plug unit from one face 32 thereof when the faces 30 and 32 are brought together with the blade contacts passed through slot entries 27, 28 then slid in the direction of the slots so that the free limbs of the blade contacts go under the socket face 30 and into the contacts 11, 12.

Reception wells 33, 34 for the blade contacts (31) and contacts 11, 12 are shown flanking a recess 35 that could be used for a loop-in or other terminal block, though such is actually here shown at 36 with a wire-entry bore 37 and transverse clamp-screw 38 accessible through hole 39 in the other end-wall 26 of the box part 10A.

Aligned with the recess 35 is a further recessed housing 40 for an earthing contact 41 of the socket unit 10. The contact 41 is carried by an earth connection terminal block 42 also with a wire-entry bore 43 and transverse clamp-screw 44 accessible via hole 45 at end 26. This earth terminal block 42 carries the contact 41 via a rivet formation 41A and the contact 41 has a centrally struck-out spring tang 46 from a bent-back base part 47 extending at 48 as an external earth connection to mount screws of accessories or boxes therefor. Effectively, the contact 41 has its base part follow the bottom of the well 40 (actually formed by the cover 10B) and extends at 49 to one side of the block 42.

The loop-in and earth blocks 36 and 42 are shown generally aligned with the blocks 14 and 13, respectively, in a particularly compact and readily wired socket unit 10.

The contact arrangement 41 is capable of engaging a T-shaped contact 55 external of the coupler or plug unit, which contact is entrant the socket 10 through hole 56 in its face 30 and then slid below edges of a narrower hole part 56A and compresses the resilient tang 46 of the earth contact 41.

Instead of the T-shaped contact 55, a U-shaped contact could be used with the hole 56 modified to have only side-extending slots from its head part, i.e. instead of the narrowed hole 56A.

Collectively, the contacts 31 (and its partner 31A) and 55 give substantial safety and security of location once entrant to and slid into contact engagement in the socket unit 10, and it is advantageous for live parts not to take mechanical loads. Thus, to assure that regardless of the orientation of the socket unit, we show the contact 55 effectively matched at 61 near the other end of the face 32 to co-operate with another hole 62 and extension 62A through the face 30 to a secure accommodation 63 for its head portion with sides thereof below the face 30.

One further feature is shown namely safety guides 64, 65, and 66, 67 for the "live" slots 27, 28 actually parts of the sides of the wells 68, 69 beyond those 33, 34.

It will be evident that a socket unit 10 is readily mounted in a base unit proper, say held in by a cover plate relative to rebate 75 formed by exterior ribbing 76.

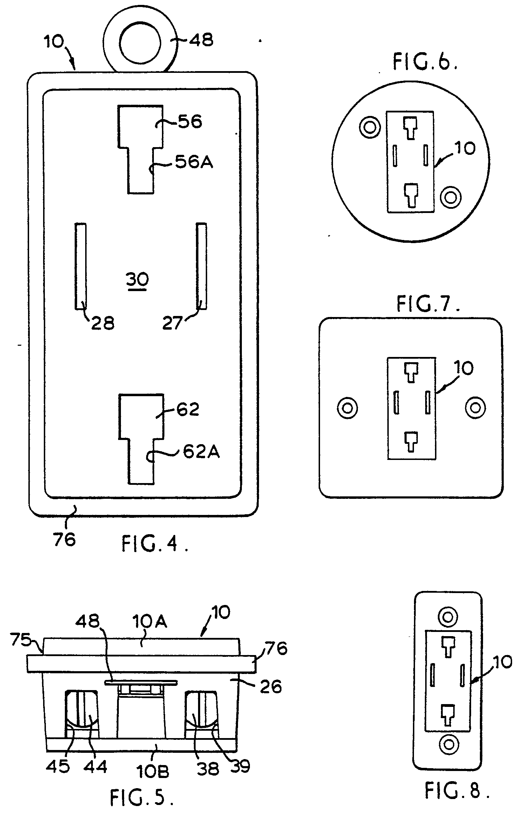

Examples of such mounting appear in Figure 6 (round "ceiling rose" replacement type), Figure 7 (square box type) and Figure 8 (architrave box type).

Figures 9 to 13 show a coupler or plug unit 100 to fit into an accessory, such as a "ceiling rose" replacement then of round generally flattish shape, or in or as a plug for an architrave or box socket. Its major face 32 has "live" contacts 31 and 31A, earth contact 55 of T-shape, and matching projection 61 extending therefrom. The base part 100A is normally associated with a cover part 100B and has an inner chamber structure subdivided to provide wells 101, 102, 103 for terminal blocks or heads 104, 105, 106 carrying the contacts 55, 31 and 31A. Such terminal blocks are again of the type having wire-accommodating holes 107, 108, 109 and transverse clamp-screws 110, 111 and 112 accessible through holes 113, 114, 115 in end-walls 116, 117 of the chamber structure 102. The T-projection 61 is not shown associated with a terminal block, but is secured at 120 in any suitable way, actually below a stepping 118 of the cover part 100B through which "live" terminal screws are further accessible.

No cord-clamp is indicated, as same may well be provided in the accessory incorporating the plug unit 100 (via rebate 121 and flange 122). However, a cord-clamp could be provided on the lower stepping of the cover part, i.e. at 123, if desired. Fixing means for the plug unit 100 relative to a threaded bore in a part of an accessory is shown by captive screw 125 in shouldered (127) bore 126.

It will be appreciated that the screw 125 could be used to hold the base and cover parts together, though same are preferably more permanently associated, whether by welding or other bonding.

It will also be appreciated that the flange 122 and rebate 121 particularly facilitate incorporation of the plug unit into any plug, ceiling rose replacement, other ceiling lighting fitting, wall light fitting, or whatever.

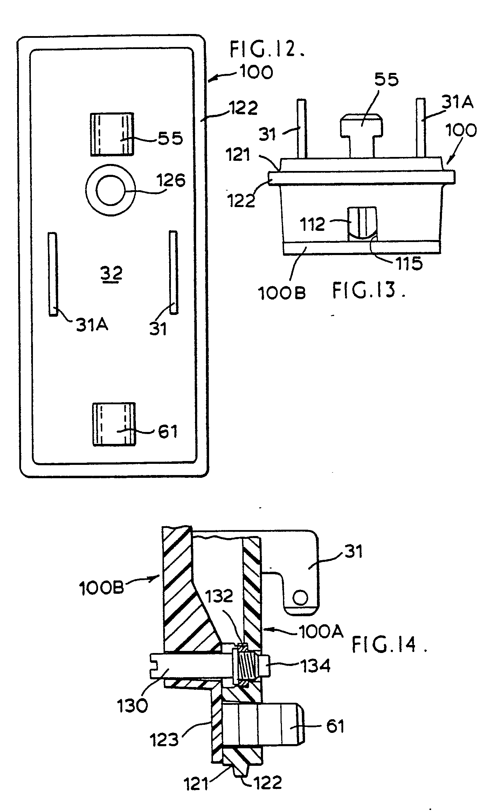

Moreover, we find that the basic design has survived well in tests at up to those for 13-amp regulations, and clearly can be realised in 2-amp, 6-amp, even 10-amp or more ratings. We do not foresee likely replacement of well-established 13-amp or 15-amp rating systems, but do see good prospects at two or more lower ratings. In fact, we appreciate that a basically common pin etc. layout could be advantageous in two or more ratings, and the system is well-suited to providing incompatibility for higher rated plug units in relation to lower rated socket units, say by different sizes, even locations if preferred, of pips and elongate recesses. Figure 14 actually shows a modification by incorporation of a "locking" screw 130 through the cover part 100B and mating with a captive nut 132 in the base part 100A to present a projection 134 to enter hole 62 when screwed down to project after inter-connection of plug and socket units. Such screw 130 can be accessible through any additional accessory cover. It will be evident that a screw such as 130, appropriately located, could serve for "rating" purposes according to the size of its projection 134, i.e. when a corresponding recess in the connecting face of the socket unit will be required of a length corresponding to sliding travel, a width just taking the projection 134, and a location to suit. Lower rated plugs and sockets would have narrower projections 134 and corresponding recesses.

Reverting to the drawings, the contacts 11, 12 are shown with pips 140, 141 and the contacts 31, 31A with holes 142 to achieve latching at full sliding engagement. Clearly, other latching means could be used, even applied to the earth terminal 55 and/or projection 61, say as other pips or bumps and recesses relative to their socket contacts or even the socket unit body itself.

For earth connection to the projection 48 relative to screws for fixing a socketed accessory to a mount or box, various additional straps may be provided, say rivetted to the projection 48. Thus, at 180° extending generally arcuate such additional strap could be used for the ceiling accessory of Figure 6 with one long limb and one short limb relative to the projection 48. If desired, the earth contacts could be extended clear through both ends of the socket unit, say to affix directly to fixing screws of the architrave accessory of Figure 8.

## Claims

1. An electrical mains outlet connection system comprising a first coupler fitting (10) of socket-type fixed or to be fixed at an outlet position and having electrical supply terminals (13, 14) with related electrical contacts (11, 12) internally thereof relative to a face (30) of the fitting which face has entries (27, 28) therethrough, and a second coupler fitting (100) of plug type capable of substantially rectilinear movement over said face (30) and having external projecting electrical contacts (31, 31A) to enter the first coupler fitting via said entries (27, 28), characterised in that said related electrical contacts (11, 12) are displaced from said entries (27, 28) so as to be shielded by said face (30) and said projecting contacts (31, 31A) have parts thereof (free ends) engaging said displaced contacts (11, 12) only after rectilinear movement of the plug fitting over said face of the socket fitting.

2. A system according to claim 1, wherein the first (10) and second (100) coupler fittings further have mutual engaging means to secure them against separation, comprising further projections (55, 61) from the second coupler fitting (100) and corresponding further entries (56, 62) through the face (30) of the first coupler fitting (10).

3. A system according to claim 2, wherein the further projections (55, 61) each have end formations extending transversely of the direction of said substantially rectilinear movement and the corresponding entries (56, 61) each have relatively enlarged and restricted (56A, 62A) parts.

4. A system according to claim 3, wherein the further projections (55, 61) are T-shaped and the corresponding entries (56, 62) are key shaped.

5. A system according to claim 2, 3 or 4 wherein, relative to the direction of said substantially rectilinear movement, the external contacts (31, 31A) and their associated said entries (27, 28) are between two said further projections (55, 61) and two said further corresponding entries (56, 62), respectively, the two further projections (55, 61) and associated entries (56, 62) being, respectively, spaced only in said direction, and the external projecting contacts (31, 31A) and associated entries (27, 28) being, respectively, spaced only transversely of said direction.

6. A system according to any one of claims 2 to 5, wherein one (55) of said further projections comprises an earth contact and its said corresponding entry (56) in the first coupler fitting (10) has an internal earth contact (41) therefor and an associated earth connection terminal (42).

7. A system according to claim 6, wherein the one further projection (55) comprising an earth contact is rearmost in said direction.

8. A system according to any preceding claim, wherein the external projection contacts (31, 31A) are L-shaped blades each extending from the end of one limb and lying wholly parallel with the direction of said substantially rectilinear movement and the associated entries (27, 28) are slots similar extending parallel with said direction and of lengths and positions such that the free ends of the external contacts go below ends of the slots (27, 28) during said movement.

9. A system according to claim 8, wherein the internal contacts (11, 12) for the external projecting contacts each comprises a pair of resilient leaves to grip the free ends of the respective external projecting contact (31, 31A) between them, the leaves being on internal contact blocks (13, 14) each disposed after its associated said leaves in said direction.

10. A system according to any preceding claim, wherein the first coupler fitting (10) further comprises a further electrical terminal (36) unconnected to any contacts of the first coupler fitting and serving for loop-in wiring purposes.

11. A system according to claim 10 with claim 7, wherein the further terminal is a block (36) located to one side of earth contact means associated with a terminal block (42) to its other side.

12. A system as claimed in any preceding claim, wherein the first coupler fitting comprises a cased basic socket unit (10) having electrical supply entries, one for each terminal thereof, through a face (10B) opposite to the first-mentioned face, and the second coupler fitting comprises a cased basic plus unit (100) with entries for wires of an electrical cord at positions behind its face from which project said external contacts, both of said basic units being adapted for incorporation into an electrical accessory or accessory plate (Figure 6—8).

13. A system according to claim 12, wherein the basic socket unit (10) has an externally projecting earth strap (48) to mate with a screw-mounting box for the first coupler fitting.

14. A system according to claim 12 or claim 13, wherein both of the plug unit (100) and the socket unit (10) have screw-clamp type terminal blocks (104, 105, 106; 13, 14, 42, 36) with their screws (110, 111, 112; 21, 22, 44, 38) accessible through holes in one or other end of their casings.

**Patentansprüche**

1. Netzauslaß-Verbindungssystem mit einer ersten Kopplungsarmatur (10) in Form einer Steckdose, die an einer Ausgangslage fixiert oder fixierbar ist und elektrische Anschlüsse (13—14) mit zugeordneten elektrischen Kontakten (11, 12) aufweist, welche in Bezug auf eine Fläche (30) der Armatur innen angeordnet sind, wobei diese Fläche Eingänge (27, 28) aufweist, mit einer zweiten Kopplungsarmatur (100) in Form eines Steckers, der im wesentlichen geradlinig über diese Fläche (30) bewegbar ist und nach außen vorspringende elektrische Kontakte (31, 31A) aufweist, welche in die erste Kopplungsarmatur über diese Eingänge (27, 28) eintreten können, dadurch gekennzeichnet, daß die elektrischen Kontakte (11, 12) von den Eingängen (27, 28) so versetzt sind, daß sie von der Fläche (30) abgedeckt sind, und daß die vorspringenden Kontakte (31, 31A) Abschnitte aufweisen, welche mit den versetzten Kontakten (11, 12) nur nach geradliniger Bewegung des Steckers über diese Fläche der Steckdose in Eingriff stehen.

2. System nach Anspruch 1, dadurch gekennzeichnet, daß die Steckdose (10) und der Stecker (100) gegenseitig in Eingriff stehende Einrichtungen aufweisen, um sie gegen ein Trennen zu sichern, daß weitere Vorsprünge (55, 61) von dem Stecker (100) ragen und daß entsprechende weitere Eingänge (56, 62) in der Fläche (30) der Steckdose (10) vorgesehen sind.

3. System nach Anspruch 2, dadurch gekennzeichnet, daß die weiteren Vorsprünge (55, 61) je Enden aufweisen, die sich quer zur geradlinigen Bewegungsrichtung erstrecken, und daß die entsprechenden Eingänge (56, 62) je relativ vergrößerte un begrente Teile (56A, 62A) aufweisen.

4. System nach Anspruch 3, dadurch gekennzeichnet, daß die weiteren Vorsprünge (55, 61) T-förmig ausgebildet sind und daß die entsprechenden Eingänge (56, 62) schlüsselförmig sind.

5. System nach Anspruch 2, 3 oder 4, dadurch gekennzeichnet, daß in Bezug auf die im wesentlichen gerade Bewegungsrichtung die äußeren Kontakt (31, 31A) und ihre zugeordneten Eingänge (27, 28) entsprechende zwischen zwei Vorsprüngen (55, 61) und zwei entsprechenden Eingängen (56, 62) vorgesehen sind, daß die Vorsprünge (55, 61) und die zugeordneten Eingänge (56, 62) entsprechend lediglich in dieser Richtung im Abstand voneinander angeordnet sind, und daß die nach außen vorspringenden Kontakte (31, 31A) und die zugeordneten Eingänge (27, 28) entsprechend nur quer zu dieser Richtung im Abstand voneinander angeordnet sind.

6. System nach einem der Ansprüche 2 bis 5, dadurch gekennzeichnet, daß ein Vorsprung (55) einen Erdkontakt aufweist und daß sein entsprechender Eingang (56) in der ersten Kopplungsarmatur (10) einen inneren Erdkontakt (41) und einen zugeordneten Erde-Verbindungsanschluß (42) aufweist.

7. System nach Anspruch 6, dadurch gekennzeichnet, daß der eine weitere Vorsprung (55), welcher einen Erdkontakt aufweist, in dieser Richtung am weitesten hinten liegt.

8. System nach einem der vorhergehenden Ansprüche, dadurch gekennzeichnet, daß die nach außen vorspringenden Kontakte (31, 31A) L-förmige Blätter sind, die sich je von dem Ende eines Gliedes erstrecken und parallel zur Richtung der im wesentlichen geradlinigen Bewegung angeordnet sind, und daß die zugeordneten Eingänge (27, 28) Schlitze sind, die sich ähnlich parallel zu dieser Richtung erstrecken und Längen und Lagen aufweisen, so daß die freien Enden der äußeren Kontakte während dieser Bewegung Enden der Schlitze (27, 28) passieren.

9. System nach Anspruch 8, dadurch gekennzeichnet, daß die inneren Kontakte (11, 12) für die nach außen vorspringenden Kontakte je ein Paar nachgiebiger Blätter umfassen, um die freien Enden des entsprechenden nach außen vorspringenden Kontaktes (31, 31A) dazwischen zu ergreifen, und daß die Blätter an inneren Kontaktblökken (13, 14) vorgesehen sind, die je diesen Blättern in der Richtung nachgeschaltet sind.

10. System nach einem der vorhergehenden Ansprüche, dadurch gekennzeichnet, daß die erste Kopplungsarmatur (10) einen weiteren elektrischen Anschluß (36) aufweist, der mit keinem Kontakt der ersten Kopplungsarmatur verbunden ist und für Schaltdrähte vorgesehen ist.

11. System ach Anspruch 7 und 10, dadurch gekennzeichnet, daß der weitere Anschluß ein Block (36) ist, der an einer Seite einer Erdkontakteinrichtung angeordnet ist, welche einem Anschlußblock (42) an der anderen Seite zugeordnet ist.

12. System nach einem der vorhergehenden Ansprüche, dadurch gekennzeichnet, daß die erste Kopplungsarmatur eine mit Gehäuse verschene Steckdose (10) umfaßt, welche für jeden Anschluß durch eine ersterwähnten Fläche entgegengesetzte Fläche (10B) elektrische Leitungseingänge aufweist, und daß die zweite Kopplungsarmatur einen mit Gehäuse versehenen Stecker (100) mit Eingängen für Drähte eines elektrischen Kabels in Lagen hinter seiner Fläche umfaßt, von welcher die äußeren Kontakte abragen, und daß beiden Armaturen einem elektrischen Zubehörteil einverleibt werden können (Fig. 6 bis 8).

13. System nach Anspruch 12, dadurch gekennzeichnet, daß die Steckdose (10) einen nach außen vorspringenden Erdungsstreifen (48) aufweist, der mit einem Kasten der ersten Kopplungsarmatur in Eingriff bringbar ist.

14. System nach einem der Ansprüche 12 bis 13, dadurch gekennzeichnet, daß der Stecker (100) und die Steckdose (10) schraubklemmenähnliche Anschlußblöcke (104, 105, 106; 13, 14, 42, 36) aufweist, deren Schrauben (110, 111, 112; 21, 22, 44, 38) durch Löcher in einem oder anderen Ende ihrer Gehäuse zugänglich sind.

**Revendications**

1. Un système de connexion électrique de sortie de secteur comprenant un premier dispositif coupleur (10) du type douille fixé ou à fixer à une position de sortie et ayant des bornes électriques d'alimentation (13, 14) avec des contacts électriques associés (11, 12) en son intérieur par rapport à une face (30) du dispositif, laquelle face présente des entrées (27, 28) à travers, et un second dispositif coupleur (100) du type fiche capable d'un mouvement sensiblement rectiligne sur ladite face (30) et ayant des contacts électriques externes en saillie (31, 31A) pour pénéter dans le premier dispositif coupleur par l'intermédiaire desdites entrées (27, 28), caractérisé en ce que lesdits contacts électriques associés (11, 12) sont déplacés par rapport aux autres entrées (27, 28) de manière à être protégés par ladite face (30) et lesdits contacts en saillie (31, 31A) présentent des parties (extrémités libres) ne venant en prise avec lesdits contacts déplacés (11, 12) qu'après un mouvement rectiligne du dispostif à fiches sur ladite face dudit dispositif à douille.

2. Un système selon la revendication 1, dans lequel les premier (10) et second (100) dispositifs coupleurs ont en outre des moyens de prise mutuelle pour les assujettir contre une séparation, comprenant d'autres saillies (55, 61) depuis le second dispositif coupleur (100) et d'autres entrées correspondantes (56, 62) à travers la face (30) du premier dispositif coupleur (10).

3. Un système selon la revendication 2, dans lequel les autres saillies (55, 61) présentent chacune des formations d'extrémité s'étendant transversalement par rapport à la direction dudit mouvement sensiblement rectiligne et les entrées correspondantes (56, 62) ont chacune des parties relativement élargies et réduites (56A, 62A).

4. Un système selon la revendication 3, dans lequel les autres saillies (55, 61) sont en forme de T et les entrées correspondantes (56, 62) sont en forme de clé.

5. Un système selon la revendication 2, 3 ou 4, dans lequel, relativement à la direction dudit mouvement sensiblement rectiligne, les contacts externes (31, 31A) et leurs dites entrées associées (27, 28) sont entre deux desdites autres saillies (55, 61) et deux desdits autres entrées correspondantes (56, 62), respectivement, les deux autres saillies (55, 61) et entrées associées (56, 62) étant respectivement écartées seulement dans ladite direction, et les contacts externes en saillie (31, 31A) et les entrées associées (27, 28) étant, respectivement, écartés seulement transversalement par rapport à ladite direction.

6. Un système selon l'une quelconque des revendications 2 à 5, dans lequel une (55) desdites autres saillies comprend un contact de terre et sa dite entrée (56) correspondante dans le premier dispositif coupleur (10) a un contact de terre interne (41) pour celui-ci et une borne de connexion de terre (42) associée.

7. Un système selon la revendication 6, dans lequel la première autre saillie (55) comprenant un contact de terre est la dernière dans ladite direction.

8. Un système selon l'une quelconque des revendications précédentes, dans lequel les contacts externes en saillie (31, 31A) sont des lames en forme de L s'étendant chacune depuis l'extrémité d'un bras et s'étendant complètement parallèlement à la direction dudit mouvement sensiblement rectiligne, et les entrées associées (27, 28) sont des fentes s'étendant de manière similaire parallèlement à ladite direction et ayant des longueurs et positions telles que les extrémités libres des contacts externes viennent en dessous des extrémités des fentes (27, 28) pendant ledit mouvement.

9. Un système selon la revendication 8, dans lequel les contacts internes (11, 12) pour les contacts externes en saillies comprennent chacun une paire de feuilles élastiques pour serrer les extrémités libres du contact externe en saillie respectif (31, 31A) entre elles, les feuilles étant sur des blocs de contacts internes (13, 14) disposés chacun après ces dites feuilles associées dans ladite direction.

10. Un système selon une quelconque des revendications précédentes, dans lequel le premier dispositif coupleur (10) comprend en outre une autre borne électrique (36) non connectée à aucun des contacts du premier dispositif coupleur et servant dans des buts d'enroulement de câble.

11. Un système selon la revendication 10 avec la revendication 7, dans lequel l'autre borne est un bloc (36) logé d'un côté de moyens de contact de terre associés à un bloc de borne (42) sur son autre côté.

12. Un système tel que revendiqué dans l'une quelconque des revendications précédentes, dans lequel le premier dispositif coupleur comprend une unité de douille de base emboîtée (10) ayant des entrées d'alimentation électrique, une pour chacune de ses bornes, à travers une face (10B) opposée à la face mentionnée en premier, et le second dispositif coupleur comprend une unité de fiche emboîtée (100) avec des entrées pour des câbles d'un fil électrique à des positions derrière sa face depuis laquelle font saillie lesdits contacts externes, les deux dites unités de base étant adaptées pour être incorporées dans une accessoire électrique ou une plaque accessoire (Figures 6—8).

13. Un système selon la revendications 12, dans lequel l'unité de douille de base (10) a un cordon de terre (48) en saillie à l'extérieur pour s'accoupler avec une boîte de montage à vis pour le premier dispositif coupleur.

14. Un système selon la revendication 12 ou la revendication 13, dans lequel à la fois l'unité de fiche (100) et l'unité de douille (10) ont des blocs de bornes du type borne à vis (104, 105, 106; 13, 14, 42, 36) avec leurs vis (110, 111, 112; 21, 22, 44, 38) accessibles à travers l'une ou l'autre extrémité de leurs boîtiers.

FIG.1.

FIG.2.

FIG.3.

1

EP 0 125 861 B1

FIG.4.

FIG.5.

FIG.6.

FIG.7.

FIG.8.

2

FIG.9.

FIG.IO.

FIG.II.

EP 0 125 861 B1

EP 0 125 861 B1

FIG.12.

FIG.13.

FIG.14.

4